# EUROPEAN PATENT SPECIFICATION

(11) **EP 3 224 009 B1**
(45) Date of publication and mention of the grant of the patent: **04.08.2021**
(21) Application number: 15862996.4
(22) Date of filing: 24.11.2015
(51) Int. Cl.: B23D 47/12, B23D 45/06, B23D 47/08, B23D 47/00, B23D 47/02, B23D 59/00, B27G 19/08

(54) **IMPROVEMENTS TO PORTABLE TABLE SAWS**
VERBESSERUNGEN AN EINER TRAGBAREN TISCHSÄGE
AMÉLIORATIONS APPORTÉES À DES SCIES CIRCULAIRES À TABLE PORTABLES

(30) Priority: 24.11.2014 US 201462083360 P
(43) Date of publication of application: 04.10.2017
(73) Proprietor: Nanjing Chervon Industry Co., Ltd., Nanjing, Jiangsu 211106 (CN)
(72) Inventor: FROLOV, Andrew, Glenview, IL 60025 (US); VORUGANTI, Ravi, Lake Barrington, IL 60010 (US); PEPPIATT, Ray, Gurnee, IL 60031 (US); KOEGEL, Jan, 72250 Freudenstadt (DE)
(74) Representative: Sun, Yiming
(86) International application number: PCT/US2015/062282
(87) International publication number: WO 2016/085910

(56) References cited:
- EP-A1- 1 738 850
- EP-A2- 1 847 347
- CH-A- 393 716
- US-A- 4 419 032
- US-A1- 2004 237 743
- US-A1- 2004 250 904
- US-A1- 2005 166 736
- US-A1- 2011 146 470
- US-A1- 2014 260 869
- US-B2- 6 595 096
- US-B2- 7 320 270
- US-B2- 8 127 648
- US-B2- 8 616 104

## Description

### Background

This disclosure relates to power tools such as table saws. More particularly, the disclosure relates to portable table saws that can be manually transported between job sites.

Portable table saws are an important tool for those in skilled trades, such as craftsmen and women in the construction industry. The portable table saw must be to endure continuous use and durable to withstand the frequently harsh conditions at a job site, as well as the dramatic bouncing and jostling that can occur when transporting between job sites. At the same time, the table saw must be portable so that it can be easily and quickly moved from site to site or around a particular job site. Moreover, the portable saw must have as minimal footprint as possible so that it can be used wherever it is needed. EP 1 738 850 A1 relates to a bench-top power tool. US 2004/250904 A1 relates to an adjustable power tool attachment for table saws. US 2011/146470 A1 relates to a woodworking machine with sensing device. US 2014/260869 A1 relates to a power tool including a support arrangement and a work surface that is supported by the support arrangement and that includes a top surface having an opening configured to receive a rotatable blade. US 2012/006170 A1 relates to a portable table saw. EP 1 847 347 A2 relates to a table saw. US 2005/166736 A1 relates to table saws with safety systems and systems to mount and index attachments. CH 393716 A relates to a table saw with a saw blade attached to a swivel arm and a splitting wedge connected downstream of the latter.

### Summary

The invention relaters to a table saw as defined in claim 1. A portable table saw is provided with several features that improve the portability of the saw without sacrificing durability and strength. In one feature, the drive assembly for the saw blade is arranged generally parallel to the saw blade rather than perpendicular as in prior devices. A worm gear arrangement may be used to transfer the rotation of the motor shaft parallel to the saw blade to a rotation of the blade shaft perpendicular to the blade. In a further aspect, a height adjustment mechanism can also incorporate a worm gear arrangement to transfer a hand crank input shaft rotation to rotation of a vertically arranged lead screw used to raise and lower the drive assembly and cutting blade. An alternative height adjustment mechanism utilizes a pivoting movement to raise and lower the drive mechanism and cutting blade. In this mechanism, the drive assembly housing is pivotably mounted to an undercarriage, and includes a ring gear segment that engages a worm gear driven by the input shaft.

In yet another aspect, a riving knife may be kinematically mounted to the undercarriage and blade shaft so that the riving knife is automatically raised and lowered with the blade and drive assembly. In an alternative, the riving knife is mounted directly to a protrusion on the housing of the drive assembly.

In a further aspect, the table saw includes a tubular frame supporting the table top and the working components. The tubular frame significantly reduces the weight of the table saw and provides convenient features for carrying the table saw and accessories stored within the frame.

### Description of the Figures

**FIG. 1** is a top view of a table saw according to one aspect of the present disclosure.
**FIG. 1a** is a top view of a traditional table saw superimposed on the table saw shown in **FIG. 1****.**
**FIG. 2** is a side view of the table saw depicted in **FIG. 1** with drive train shown in cut-away.
**FIG. 3** is a side view of the table saw depicted in **FIG. 1** showing the drive train and a height adjustment feature.
**FIG. 4** is a side view of the table saw depicted in **FIG. 1** showing the drive train and another height adjustment feature.
**FIG. 5** is a side view of the table saw depicted in **FIG. 1** showing a frame construction according to one aspect of the present disclosure.
**FIG. 6** is a bottom perspective view of the table saw depicted in **FIG. 5****.**
**FIG. 7** is a side view of the table saw depicted in **FIG. 5** illustrating the center of gravity of the saw.
**FIG. 8** is a further side view of the table saw depicted in **FIG. 5****,** shown with accessories stored within the frame.
**FIG. 9** is a rear end view of the table saw depicted in **FIG. 8****.**
**FIG. 10** is another side view of the table saw depicted in **FIG. 8****.**
**FIG. 11** are perspective views of corner elements for the frame shown in **FIGS. 5-8****.**
**FIG. 12** are perspective and front views of a handle for the frame shown in **FIGS. 5-8****.**
**FIG. 13** is a front view of a front plate for the table saw shown in **FIGS. 5-8****.**
**FIG. 14** is a depiction of a user carrying the table saw shown in **FIGS. 5-8****.**
**FIG. 15** is representation of a portable table saw with three worm drive mechanisms.
**FIG. 16** is side view of a table saw with a worm drive mechanism for rotating the cutting blade.
**FIG. 17** is an enlarged perspective view of the drive and height adjustment components.
**FIG. 18** is an enlarged sectional view of the drive assembly shown in **FIGS. 5-8****.**
**FIG. 19** is a bottom perspective view of the drive assembly shown in **FIGS. 5-8****.**
**FIG. 20** is a side perspective view of the drive assembly shown in **FIG. 19****.**
**FIG. 21** is a top view of the drive assembly of the table saw shown in **FIG. 19****.**
**FIG. 22** is a side view of the drive assembly of **FIG. 19** mounted on the height adjustment assembly of the table saw shown in **FIGS. 5-8****.**
**FIG. 23** is top view of the drive assembly mounted on the height adjustment assembly of the table saw shown in **FIGS. 5-8** showing the degrees of movement of the drive assembly.
**FIG. 24** is a perspective view of a pivoting height adjustment mechanism according to the disclosure.
**FIG. 25** is a side view of the pivoting height adjustment mechanism of **FIG. 24** integrated with the power tool carriage.
**FIG. 26** is a perspective view of the height adjustment mechanism and carriage of **FIG. 25** shown with the drive assembly pivoted and the cutting blade lowered.
**FIG. 27** is a perspective view of the height adjustment mechanism and carriage of **FIG. 26** shown with the drive assembly pivoted and the cutting blade lowered even further.
**FIG. 28** is a perspective view of the height adjustment mechanism and carriage of **FIG. 25** shown with the drive assembly and the cutting blade in the maximum height position.
**FIG. 29** is a side view of the portable power tool incorporating the pivoting height adjustment mechanism of **FIG. 24** shown with the drive assembly pivoted and the cutting blade in the minimum height or fully lowered position.
**FIG. 30** is a side view of the portable power tool of **FIG. 29** with the drive assembly pivoted and cutting blade in an intermediate height position.
**FIG. 31** is a perspective view of the undercarriage shown in **FIGS. 5-8****.**
**FIG. 32** is a plan view of the undercarriage shown in **FIG. 31****.**
**FIG. 33** is an end perspective view of the undercarriage assembly shown in **FIGS. 5-8****.**
**FIG. 34** is a side view of a blade cover used with the undercarriage assembly shown in **FIG. 33****.**
**FIG. 35** is a perspective view of a portable table saw according to the disclosure.
**FIG. 36** is a perspective view of an undercarriage of the table saw shown in **FIG. 35** with the cutting blade and riving knife at the maximum height.
**FIG. 37** is a perspective view of the undercarriage shown in **FIG. 36****.**
**FIG. 38** is an enlarged perspective view of a mounting for a riving knife to the drive assembly housing.
**FIG. 39** is a perspective view of the riving knife mounted to the drive assembly housing.
**FIG. 40** is a further perspective view of the riving knife mounted to the drive assembly housing.
**FIG. 41** is a top view of the drive assembly housing shown in **FIGS. 39-40****.**

### Detailed Description

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles of the disclosure as would normally occur to one of ordinary skill in the art to which this disclosure pertains.

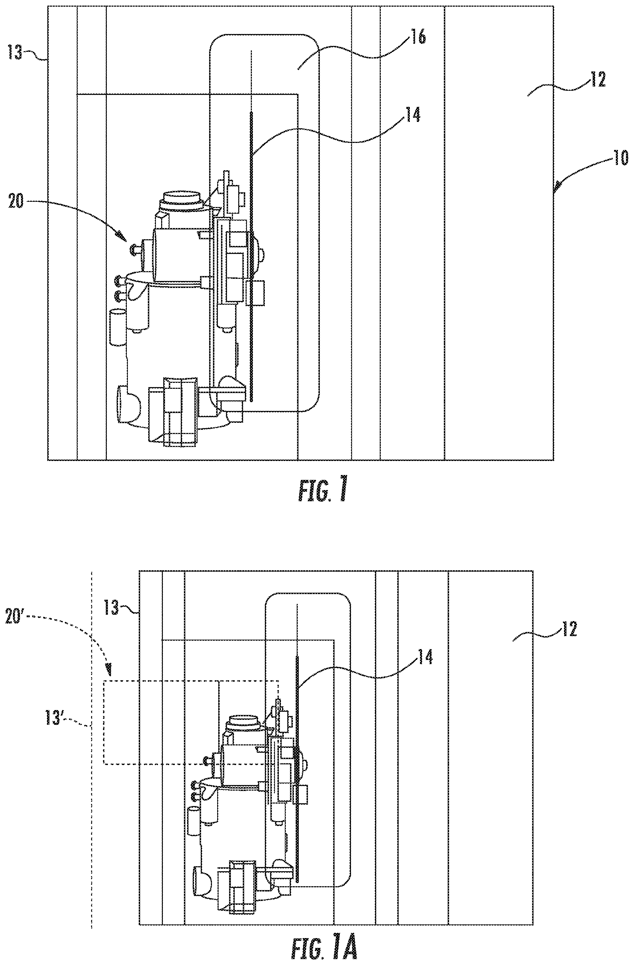

The disclosure contemplates a portable table saw, such as the saw **10** shown in **FIGS. 1, 1a**. As with typical table saws, the saw **10** includes a table top **12** which supports the workpiece and a saw blade **14** extending through a throat plate **16** mounted in the table top. As shown in **FIG. 1****,** the saw blade **14** is driven by a drive assembly **20** that is arranged parallel to the blade and wholly contained within the envelope of the table top **12.** In particular, the drive assembly **20** is disposed inboard of the side edge **13** of the table top. In contrast, the drive assembly **20'** of prior table saws, such as the saw shown in **FIG. 1a**, is mounted perpendicular to the saw blade and extends beyond the side edge **13** of the table top **12.** In order to house and protect the drive assembly **20'** the side edge **13'** of the table top must be extended beyond the location of the side edge **13** for the presently disclosed table saw **10.** Put another way, the parallel mounted drive assembly **20** of the present disclosure allows the table top **12** and thus the entire table saw **10** to have a reduced profile relative to the prior table saws.

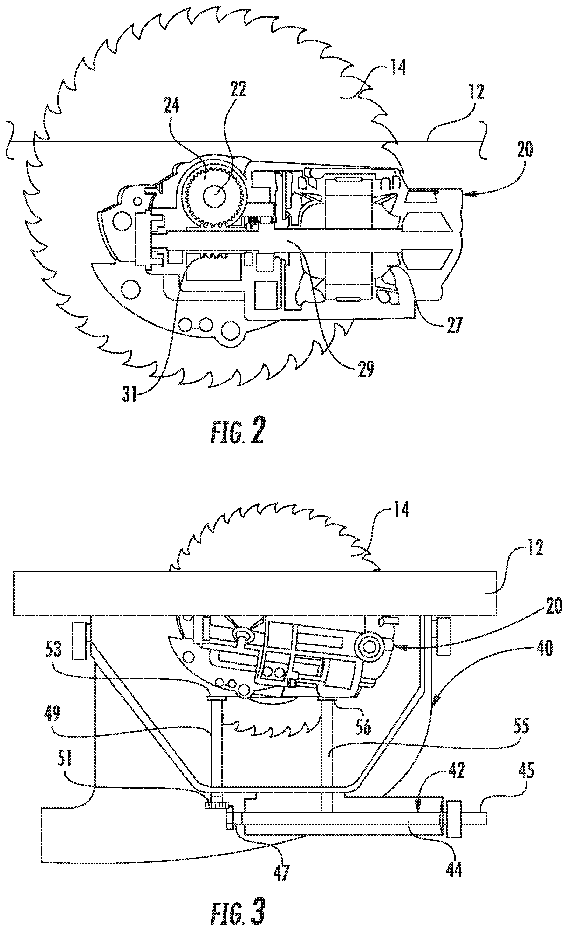

In order to achieve the parallel drive assembly **20,** the assembly includes a motor **27** that is oriented with its motor shaft **29** extending generally parallel to the cutting blade **14,** as depicted in **FIG. 2****.** The motor shaft **29** defines a worm gear **31** at its distal end that mates with a driven gear **24** mounted to the blade shaft **22.** Alternatively, the driven gear **24** may be affixed to the saw blade **14** in a manner that allows the gear **24** to mesh with the worm gear **31.** It can of course be appreciated that the worm gear/driven gear **31/24** arrangement creates a right angle drive between the motor **27** and cutting blade **14,** with a primary benefit realized in the significantly reduced profile or envelope for the drive assembly and table saw. The worm gear arrangement also allows the blade shaft 22 to be oriented close to the table top **12,** as depicted in **FIG. 3****,** which allows for maximum vertical positioning of the cutting blade **14.**

The table saw **10** further includes a height adjustment mechanism **42** that is also oriented generally parallel with the cutting blade, as shown in **FIG. 3****.** The height adjustment mechanism **42** includes an input shaft **44** situated beneath the drive assembly **20** and extending generally parallel to both the cutting blade **14** and the table top **12.** The input shaft **44** may include a hand crank **45** that is accessible at one edge and beneath the table top **12,** or may be connected to a powered drive capable of rotating the input shaft **44.** The input shaft further includes a pinion gear **47** at its inboard end that is in meshed engagement with a pinion gear **51** connected to a driven shaft **49.** The driven shaft **49** is in the form of a lead screw that threadedly engages a screw mount **53** rotatably supported on the carriage **40.** The screw mount **53** thus includes female threads that are complementary to the male threads of the lead screw driven shaft **49.** The carriage supports the drive assembly **20** so that rotation of the lead screw causes vertical translation of the drive assembly **20** and ultimately the cutting blade **14** relative to the carriage **40** and table top **12.** A guide rod **55** may be slidably disposed within a guide **56** of the drive assembly to add stability to the assembly during vertical movement. The driven shaft **49** is threaded at least along a sufficient length of the shaft from the screw mount **53** to permit vertical translation of the carriage **40** to lower the blade **14** entirely below the table top **12.**

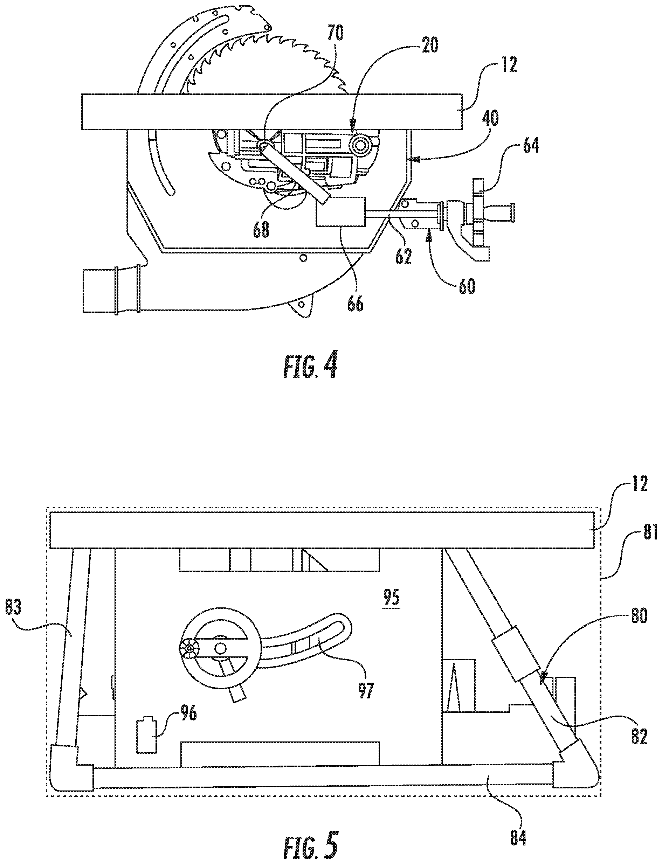

An alternative height adjustment mechanism **60** is shown in **FIG. 4****.** In this mechanism, the input shaft **62** is in the form of a lead screw that is in meshed engagement with an adjustment nut **66.** The input shaft **62** is arranged within the table saw in a manner similar to the input shaft **42** of the mechanism **42.** A hand crank **64** is thus accessible to rotate the input shaft to raise and lower the cutting blade relative to the table top. The adjustment nut **66** is pivotably coupled to a pivot link **68** that is pivotably connected to the carriage **40** at a pivot mount **70.** Rotation of the input shaft **62** causes translation of the adjustment nut **66** in a direction generally parallel to the saw blade and to the table top. This translation of the adjustment nut **66** is transmitted via the pivot link **68** to a vertical movement of the pivot mount **70,** and ultimately a vertical movement of the carriage **40** and cutting blade **14.** The carriage **40** can be supported relative to the table saw frame to restrict the carriage to move vertically rather than at an arc as the pivot link **68** rotates.

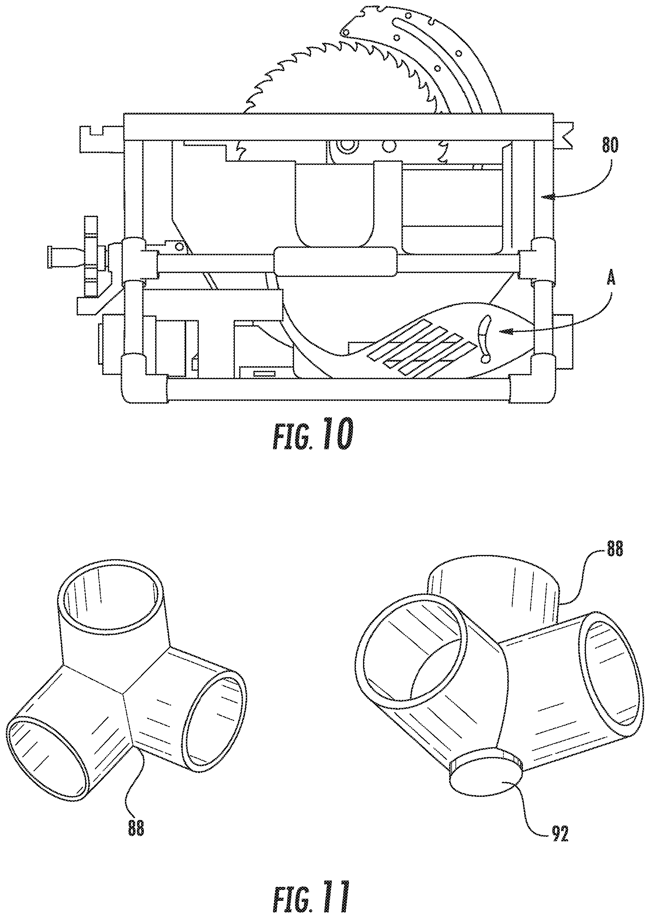

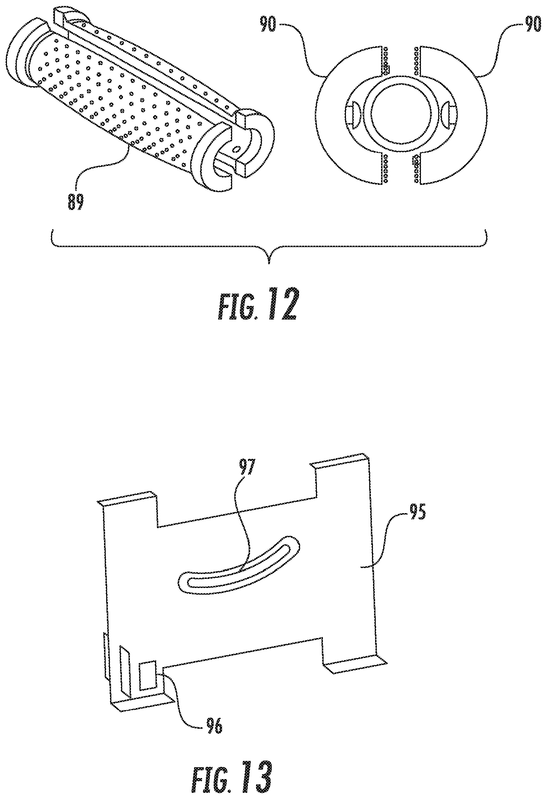

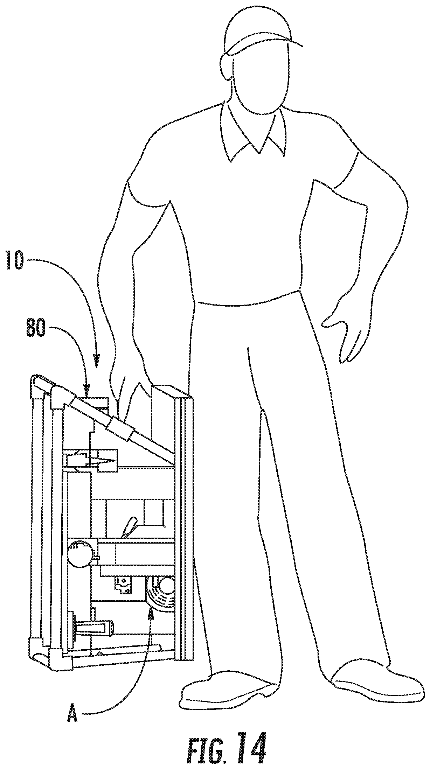

In a further feature of the portable table saw **10,** a frame assembly **80** is provided as shown in **FIGS. 5-13** to support and contain the working components, while creating a stable base for table top **12.** The frame assembly **80** is contained within the envelope **81** of the table top, which itself has a reduced profile as shown in **FIG. 1** due to the parallel orientation of the drive assembly **20.** The frame assembly **80** includes a plurality of tubular elements, including front members **82,** rear members **83,** bottom members **84** and cross members **85, 86.** A corner foot **87** is used to connect the members together to form the frame. As shown in **FIG. 14****,** each corner foot **87** may include a pad **92** at the base of the foot to provide a slip-resistant surface. The pad **92** may also be configured to provide some vibration absorption feature. A handle grip **89** may be mounted to the cross member **86** to provide ready means to lift and carry the portable table saw **10.** The handle grip **89** may be formed by two halves **90** affixed to the cross member **86,** as depicted in **FIG. 12****.** The frame components may be tubular metal components, such as aluminum or stainless steel, or other material that is lightweight and durable.

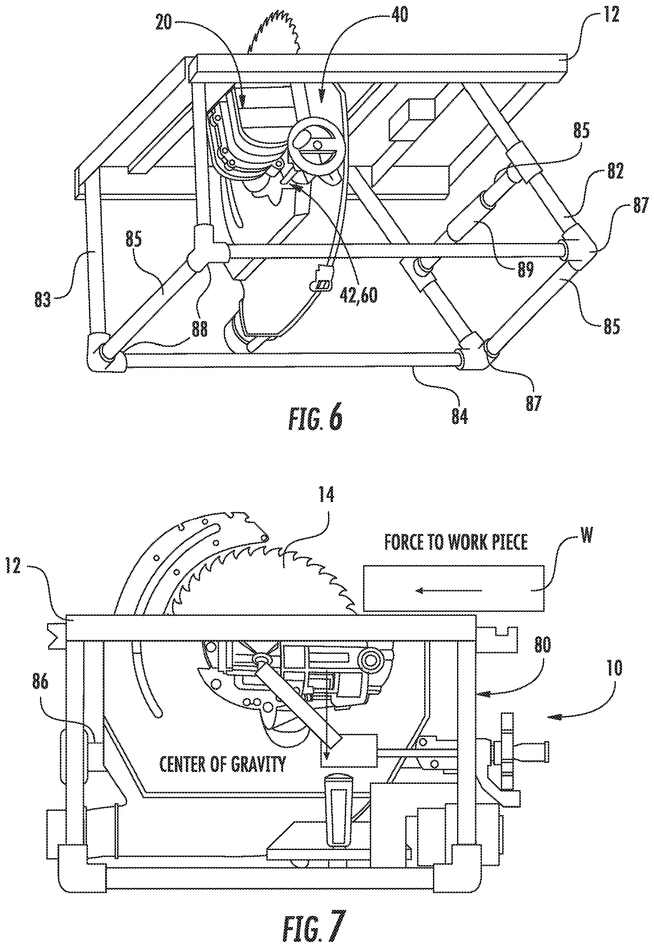

As illustrated in **FIG. 7****,** the cross member **86,** and thus the handle grip **89,** is generally aligned with the center of gravity of the table saw **10** so that the table saw is balanced when lifted by the handle grip. Moreover, the frame assembly **80** is configured to support the working components so that the center of gravity of the table saw is shifted toward the front of the table top **12** where the workpiece **W** enters the power tool and is engaged by the cutting blade **14.** Positioning the center of gravity forward of the axis of rotation of the saw blade improves the stability of the table saw during a cut.

A front plate **95 (****FIG. 13****)** is provided for the table saw to provide a bevel adjustment feature. In particular, the front plate **95** includes a bevel slot **97** through which the input shaft **44/62** of the height adjustment mechanism **42/60** extends, as shown in **FIG. 5****.** The front plate **95** may be mounted between the table top **12** and frame assembly **80** or may be mounted directly to the frame assembly. The front plate **95** may be provided with an on/off switch **96** that is readily accessible at one side of the frame assembly.

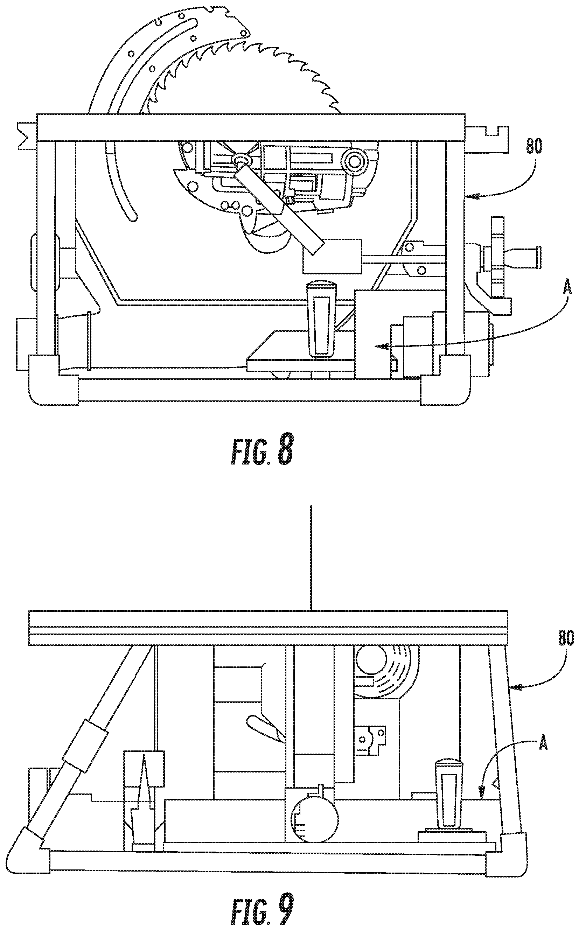

The table saw **10** of this disclosure provides an envelope for housing accessories **A** for use with the power tool, as depicted in **FIGS. 8-10** and **14.** As best seen in **FIG. 14****,** the frame assembly **80** supports the accessories **A** in a manner that allows the entire table saw, accessories and all, to be manually transported. Appropriate brackets and clips may be provided within the frame assembly to grasp the accessories.

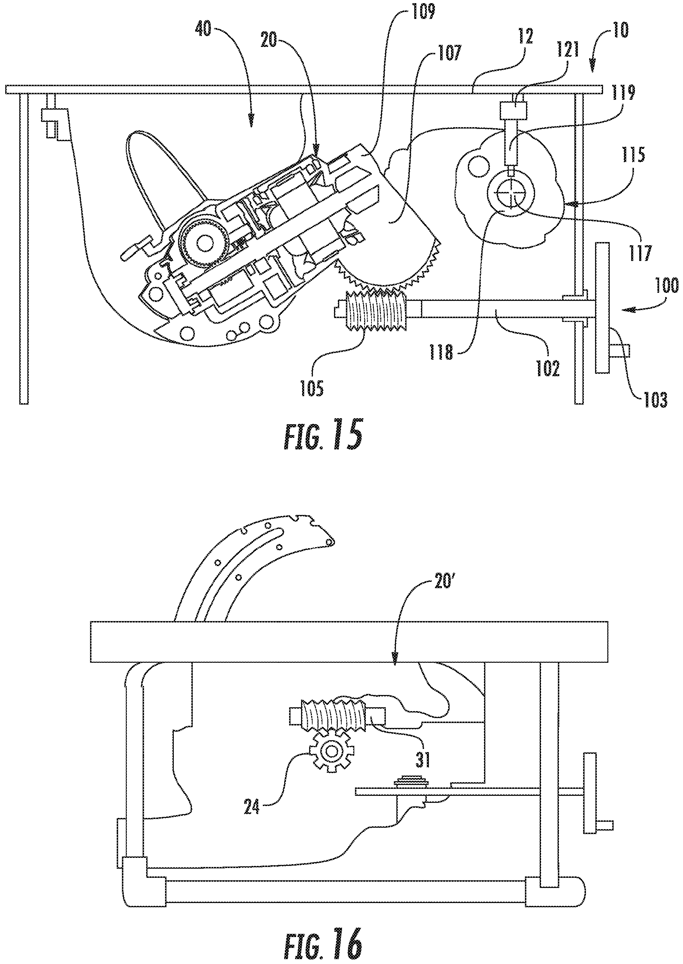

As shown in **FIG. 15****,** the table saw **10** can incorporate a worm gear in not only the drive assembly **20,** as described above, but also in the height and bevel adjustment features. Thus, in one aspect, a height adjustment mechanism **100** includes an input shaft **102** with a manual crank **103,** similar to the input shafts described above. The input shaft **102** includes a worm gear **105** at the distal end that engages a spur gear segment **107.** The spur gear segment **107** is connected to the carriage **40** at a pivot mount **109.** Rotation of the worm gear **105** along an axis parallel to the table top **12** causes pivoting of the spur gear segment **107** about an axis perpendicular to the worm gear, but also parallel to the table top. As the spur gear segment pivots, the pivot mount **109** translates vertically to raise and lower the carriage **40** and thus the cutting blade. The spur gear segment **107** subtends an arc that allows the spur gear to remain in contact with the worm gear **105** throughout the entire range of vertical movement of the carriage **40.** As one example, the spur gear segment **107** can subtend an angle of 40°-55°.

The bevel adjustment mechanism **115** is similar in construction. The input shaft **117** includes a worm gear **118** that meshes with a spur gear segment **119.** The spur gear segment **119** is pivotably mounted to the carriage at a bushing **121** so that rotation of the worm gear **118** pivots the spur gear segment **119** relative to the table saw frame, which thus causes the carriage **40** to pivot relative to the table top **12.** **FIG. 16** shows a modified drive assembly **20'** in which the worm gear **31** is oriented above the driven gear **24** for the saw blade.

It can be appreciated that the use of the worm gears in the portable table saw **10** provides a robust drive mechanism for all of the moving or movable components, while maintaining a minimal envelope. The table saw can incorporate a worm gear drive in any combination of the drive mechanism, height adjustment mechanism and bevel adjustment mechanism.

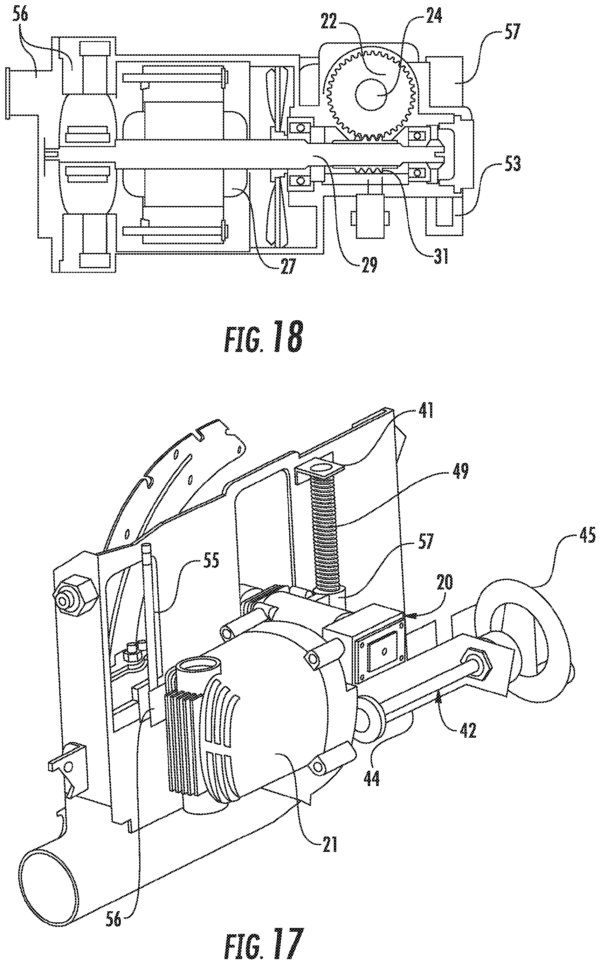

Further details of the table saw **10** are shown in **FIGS. 17-25** the table saw **10** includes the drive assembly **20** that is oriented parallel to the cutting blade **14,** as described above. As best illustrated in **FIG. 17****,** the drive assembly is supported on the carriage **40** by the vertically oriented rods **49, 55.** The driven shaft or lead screw **49** and the guide rod **55** are part of the vertical adjustment mechanism **42** described above. The lead screw **49** threadedly engages the screw mount **53,** which is in the form of a threaded collar integrated into the drive assembly **20,** as best shown in **FIGS. 17-20****.** The threaded collar **53** may be integrated into the housing **21** for the drive assembly, where the housing is configured to support the motor **27** and the gear train between the motor and the saw blade. The lead screw is further guided by a guide collar **57** integrated into the housing **21** and offset from the threaded collar **53.** The upper and lower ends of the lead screw **49** are supported on the carriage **40** by suitable rotational mounts **41.** The guide rod **55** may be similarly supported on the carriage **40,** although it is understood that the guide rod **55** does not need to be rotatably mounted to the carriage.

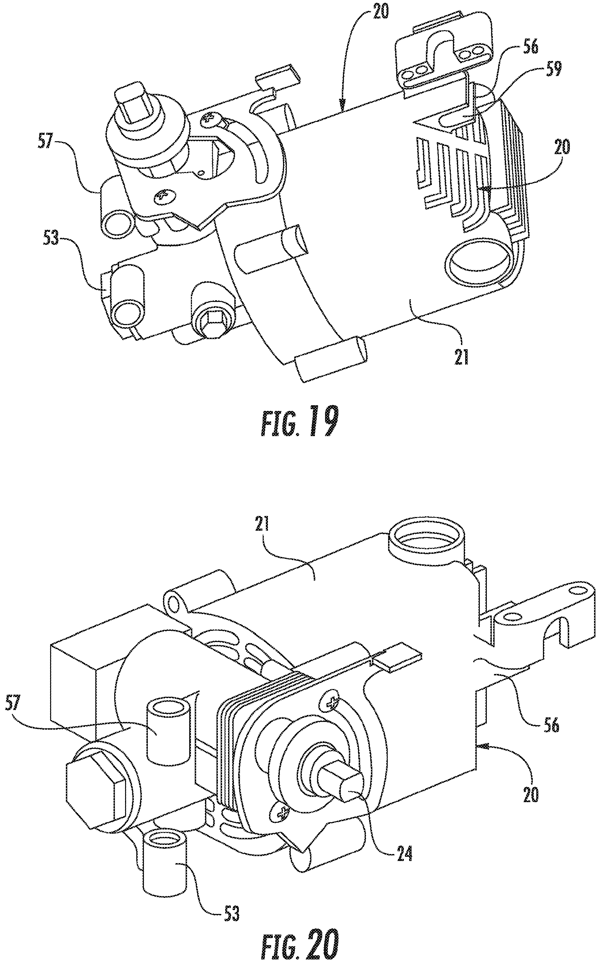

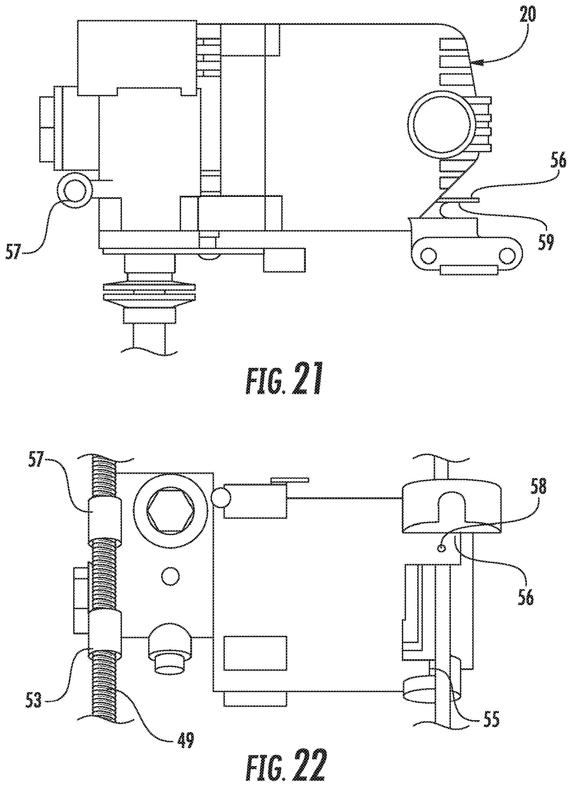

The drive assembly housing **41** further includes the guide **56,** which may be a U-shaped bracket defining a slot **59,** as best seen in **FIG. 19** and **21****.** As illustrated in **FIGS. 22-23****,** the lead screw **49** is restricted within the screw mount **53** and the guide collar **57,** while the guide rod **55** is disposed within the slot **59** of the guide **56** to permit relative vertical and lateral (parallel to the saw blade) movement within the slot. An adjustment screw **58** may be mounted in the guide **56** to limit the transverse movement of the drive assembly **20** to maintain the cutting blade **14** in proper alignment with the throat plate **16** of the table saw. The adjustment screw **58** may be adjusted for fine tuning the paralleness of the drive assembly **20** to the cutting blade **14,** as well as the interface between the worm gear **31** and the driven gear **24** of the cutting blade shaft **22.** It can be appreciated that the interface between the guide rod **55** and the slot **59** allowing lateral movement of the carriage **40** helps avoid dragging or binding as the drive assembly **20** is moved up and down. Moreover, the slot **59** accommodates dimensional differences and minor misalignment between the lead screw **49** and guide rod **55.**

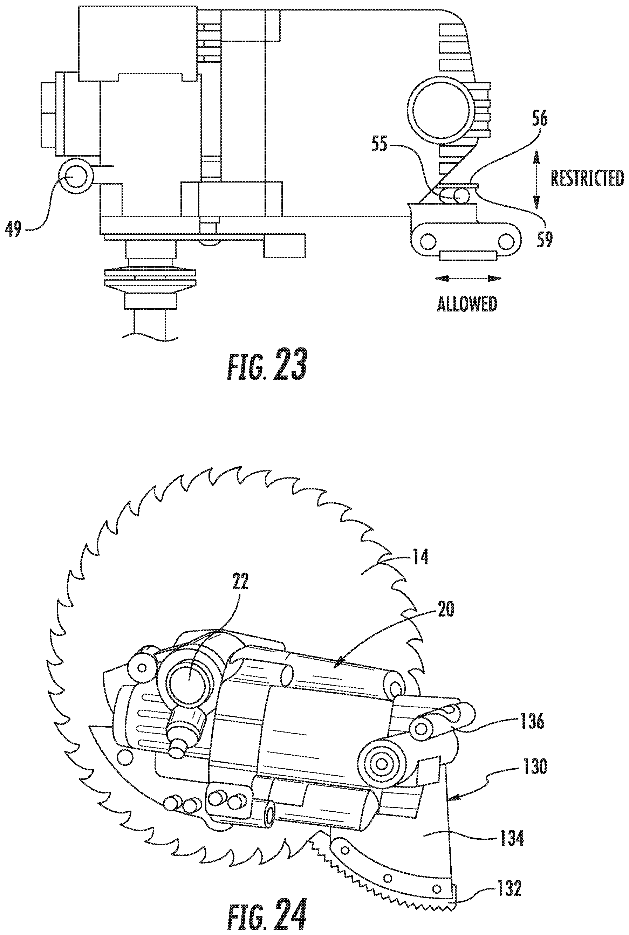

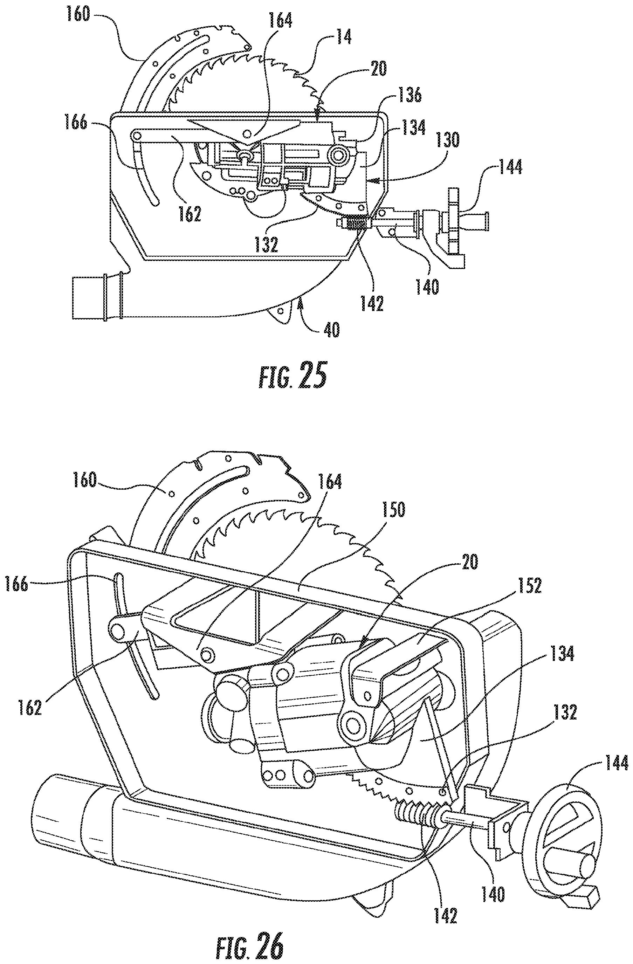

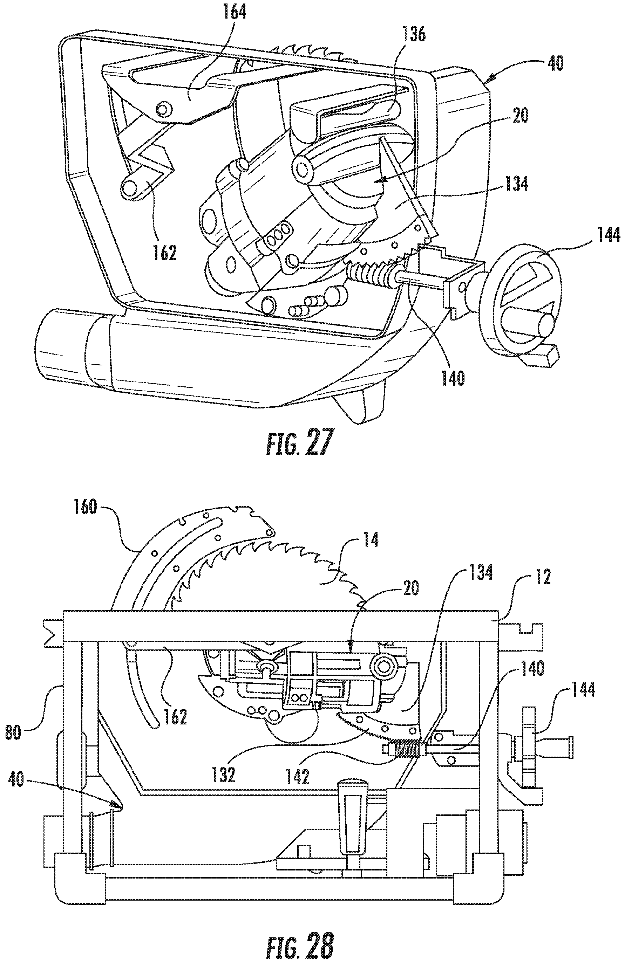

The portable power tool **10** may incorporate a pivoting height adjustment mechanism **130,** as shown in **FIGS. 24-30****.** The mechanism **130** includes a ring gear segment **132** which is fastened to a pivot plate **134.** The pivot plate **134** may be incorporated into the drive assembly housing **21,** as best seen in **FIGS. 26-27****.** The drive assembly **20** is supported at a pivot mount **136** so that the entire drive assembly, including the cutting blade **14** mounted on the blade shaft **22,** can pivot relative to the table top **12** and frame **80,** as shown in **FIGS. 28-29****.** As the drive assembly **20** pivots the blade raises or lowers relative to the table top **12.**

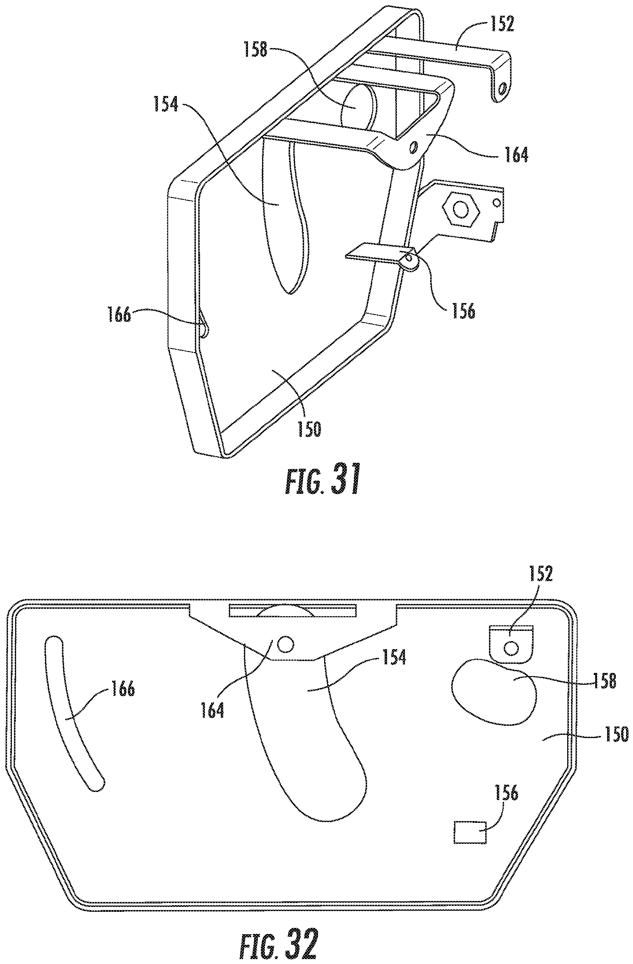

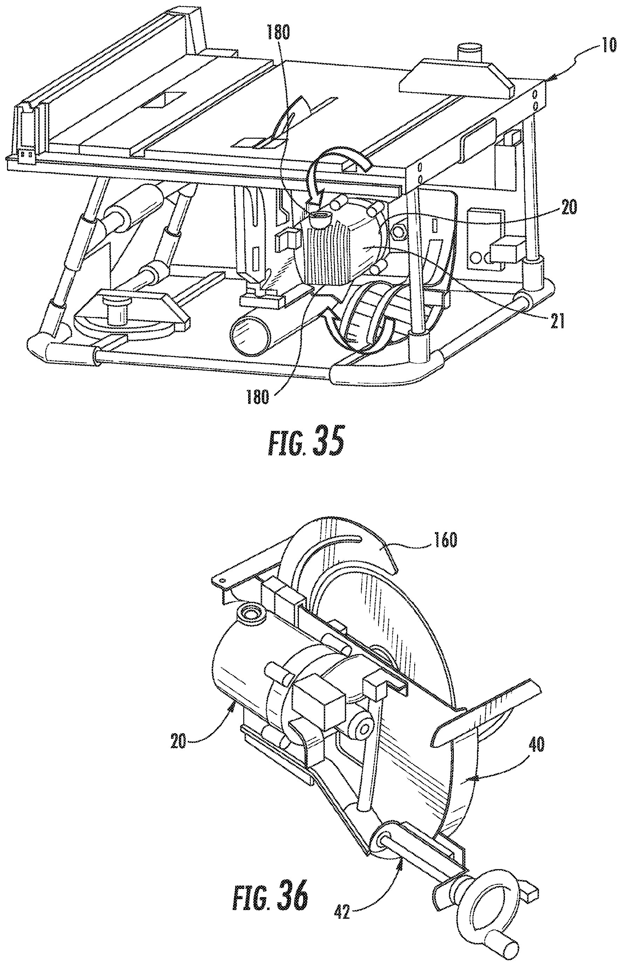

The ring gear segment **132** is in meshed engagement with a worm gear **142** at the inboard end of an input shaft **140.** A hand crank **144** is affixed to the input shaft to rotate the shaft and ultimately the worm gear **142** to pivot the drive assembly and blade. The drive assembly **20** and pivoting height adjustment mechanism **130** are supported on an undercarriage **150** that is affixed to the carriage **40** that houses the cutting blade **14.** As shown in more detail in **FIGS. 31-32****,** the undercarriage **150** includes a bracket **152** for supporting the pivot mount **136.** A support bracket **156** supports the inboard end of the input shaft **140** of the height adjustment mechanism. The opposite end of the shaft adjacent the crank **144** is supported by front plate **95** (see **FIG. 13****).** In one feature, the input shaft **140** and height adjustment mechanism **130** is supported within a curved slot **97** in the front plate **95** to accommodate bevel angle adjustment as the entire carriage **40,** undercarriage **150,** drive assembly **40** and height adjustment mechanism **130** are pivoted relative to the table top **12** to achieve a bevel cut. The undercarriage further defines a curved slot **154** for passage of the drive train of the drive assembly, including the blade shaft **22.** An access opening **158** may also be provided to permit access to the motor brushes. As shown in **FIG. 35****,** the housing **21** for the drive assembly **20** may incorporate vertical channels **180** for access to the motor brushes for servicing.

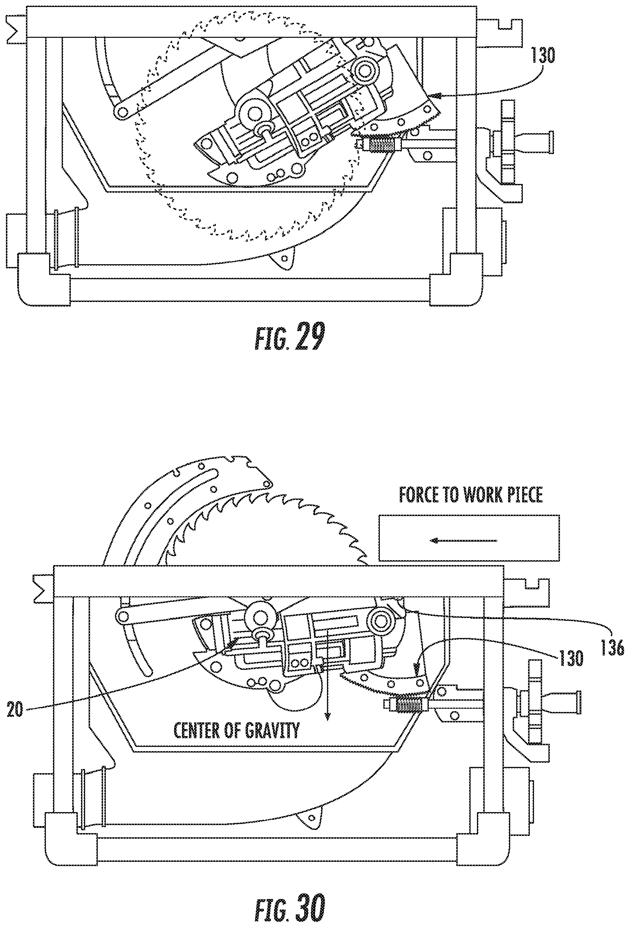

Turning to **FIG. 30****,** it can be seen that the pivoting height adjustment mechanism **130** is located close to the center of gravity of the drive assembly **20.** This arrangement allows for smooth operation of the meshed gears **132, 142** and allows for more precise control of the height adjustment. Since the center of gravity is close to the pivot mount **136** the moment arm of the drive assembly mass is minimized.

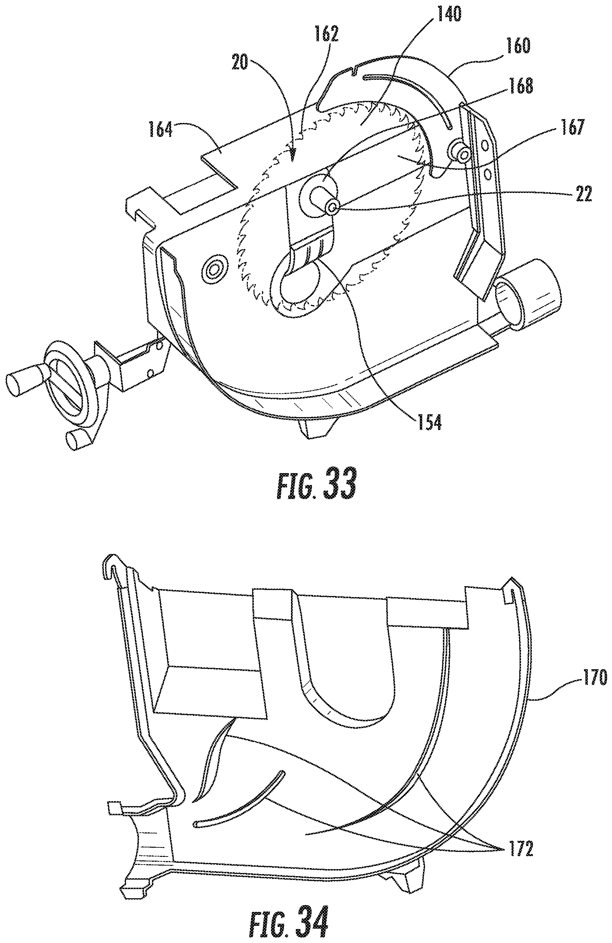

It can be appreciated that many of the components of the drive mechanism **20,** such as the housing **21,** and of the height adjustment mechanism **130,** such as the gear segment **132,** pivot plate **134** and worm gear **142,** may be formed of high strength plastic to reduce the weight of the power tool and improve its portability. While the undercarriage **150** may also be formed of plastic, metal may be preferable for strength and durability. The undercarriage may thus be formed as a die cast metal, such as aluminum or magnesium or alloys thereof, or may be formed as a metal stamping from aluminum or stainless steel or similar metal. The carriage **40** and blade cover **170 (****FIG. 34****)** may be formed of plastic. The blade cover **170** may be molded with vanes **172** to direct air flow away from the cutting blade to direct dust and debris toward the dust port of the carriage **40.**

In a further aspect, the undercarriage **150** includes features for integrating a riving knife **160** shown in **FIGS.** 25-26. In particular, the undercarriage **150** includes a mount **164** for pivotably supporting a link **162** that is fastened to the riving knife **160** through a curved slot **166.** The curved slot allows the riving knife to pivot with the drive assembly as the pivoting height adjustment mechanism **130** is operated. The power tool includes kinematics that causes the riving knife to raise and lower automatically with the drive mechanism and cutting blade **14.** As shown in **FIG. 33****,** a second link **167** is provided between the riving knife **160** and the blade shaft **22.** The second link **167** includes an annular end **168** that fits around the shaft **22** so that the second link moves as the shaft **22** of the cutting blade **14** translates. As the cutting blade moves within the power train opening **154** in the undercarriage, the second link **167** pulls the lower end of the riving knife **160.** The adjustment link **162** on the opposite side of the undercarriage ensures consistent movement of the riving knife along the curved slot **166.**

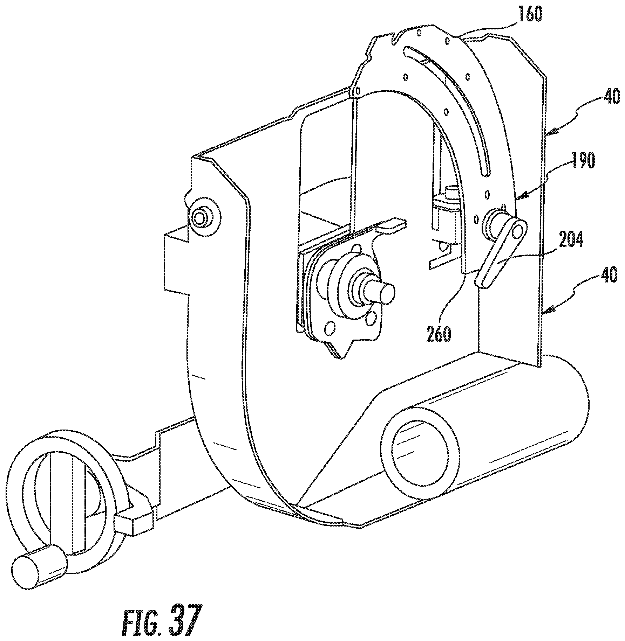

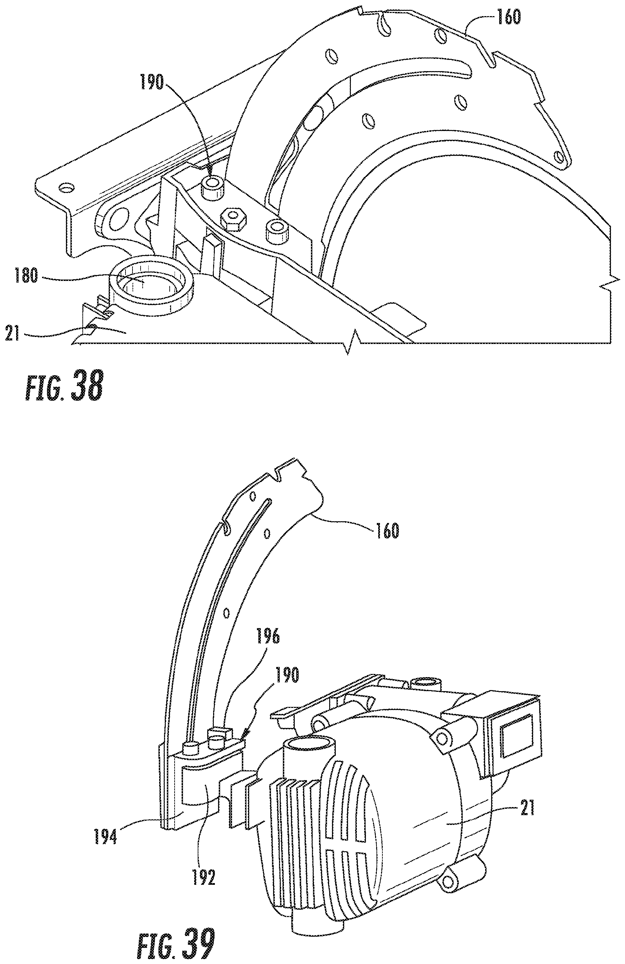

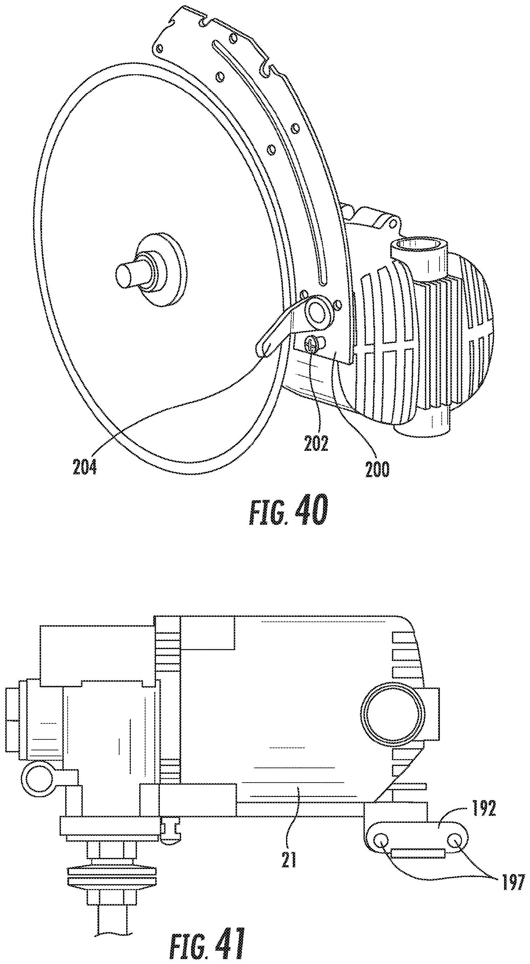

As illustrated in **FIGS. 36-41** a riving knife **160** may be mounted directly to the drive assembly housing **21** so that the riving knife smoothly and consistently raises and lowers with the drive assembly and cutting blade. As best shown in **FIGS. 37-38****,** the drive assembly housing **21** can include a mounting assembly **190** for adjustably mounting the riving knife to the housing. The assembly **190** includes a protrusion **192** extending outward from the housing **21** to support the riving knife inside the carriage **40.** The protrusion supports an adjustment plate **194** that is mounted to the protrusion by set screws **196** engaging corresponding threaded openings **197 (****FIG. 41****).** The set screws can be used to adjust the angular orientation of the riving knife relative to the saw blade. A mounting plate **200** sandwiches the riving knife against the adjustment plate **194.** A set screw **202** bears against the adjustment plate **194** to adjust the side-to-side position of the riving knife relative to the blade. A locking lever **204** is used to tighten the riving knife to the protrusion **192** of the housing **21** once the fine tune adjustments have been made.

A portable table saw is provided with several features that improve the portability of the saw without sacrificing durability and strength. In one feature, the drive assembly is arranged generally parallel to the cutting blade rather than perpendicular as in prior devices. A worm gear arrangement may be used to transfer the rotation of the motor shaft parallel to the saw blade to a rotation of the blade shaft perpendicular to the blade. In a further aspect, a height adjustment mechanism can also incorporate a worm gear arrangement to transfer the hand crank input shaft rotation to rotation of a vertically arranged lead screw used to raise and lower the drive assembly and cutting blade. An alternative height adjustment mechanism utilizes a pivoting movement to raise and lower the drive mechanism and cutting blade. In this mechanism, the drive assembly housing is pivotably mounted to an undercarriage, and includes a ring gear segment that engages a worm gear driven by the input shaft.

In yet another aspect, a riving knife may be kinematically mounted to the undercarriage and blade shaft so that the riving knife is automatically raised and lowered with the blade and drive assembly. In an alternative, the riving knife is mounted directly to a protrusion on the housing of the drive assembly.

In a further aspect, the table saw includes a tubular frame supporting the table top and the working components. The tubular frame significantly reduces the weight of the table saw and provides convenient features for carrying the table saw and accessories stored within the frame.

While the disclosure has been illustrated and described in detail in the drawings and foregoing description, the same should be considered as illustrative and not restrictive in character. It is understood that only the preferred embodiments have been presented and that all changes, modifications and further applications that fall within the subject-matter of claims are desired to be protected.

## Claims

1. A table saw (10) comprising:
a table top (12) defining a slot for receiving a saw blade (14) therethrough;
a saw blade (14); and
a drive assembly (20) including:
a motor (27) having a motor shaft (29); and
a gear arrangement (31/24) between the motor shaft (29) and the saw blade (14) for rotating the saw blade (14) on operation of the motor (27),
**characterized in that** the drive assembly (20) is supported relative to the table top (12) so that the motor shaft (29) is arranged substantially parallel to a plane of the saw blade (14) and the table top (12).

2. The table saw (10) of claim 1, wherein the gear arrangement (31/24) includes:
a worm gear (31) on said motor shaft (29); and
a driven gear (24) associated with said saw blade (14) and configured to mesh with said worm gear (31) at substantially a right angle.

3. The table saw (10) of claim 1, further comprising:
a carriage (40) supporting said saw blade (14) and said drive assembly (20) relative to said table top (12); and
a height adjustment mechanism (42) disposed between said carriage (40) and said drive assembly (20) for adjusting the height of the drive assembly (20) and the saw blade (14) relative to the table top (12).

4. The table saw (10) of claim 3, wherein:
said drive assembly (20) includes a housing (21) supporting said motor (27); and
said height adjustment mechanism (42) includes;
a guide rod (55) supported on said carriage (40) vertically relative to said table top (12);
a guide (56) included on said housing (21) for slidably receiving said guide rod (55);
a height adjustment shaft (49) supported on said carriage (40) substantially parallel to said guide rod, said shaft including a lead screw portion;
a screw mount (53) included on said housing (21) for threaded engagement with said lead screw portion of said height adjustment shaft (49); and
a drive mechanism for rotating said height adjustment shaft (49) to vertically adjust the drive assembly (20) relative to the table top (12).

5. The table saw (10) of claim 4, wherein said drive mechanism includes:
an input shaft (44) supported by said carriage (40) substantially perpendicular to said height adjustment shaft (49);
a right angle gear arrangement (31/24) between said input shaft (44) and said shaft for translating rotation of said input shaft (44) to rotation of said height adjustment shaft (49).

6. The table saw (10) of claim 5, wherein said input shaft (44) includes a manual crank (45) accessible remote from said right angle gear arrangement (31/24) to permit manual rotation of said input shaft (44).

7. The table saw (10) of claim 3, wherein:
said drive assembly (20) includes a housing (21) supporting said motor (27); and
said height adjustment mechanism (60) includes;
an input shaft (62) supported by said carriage (40) substantially parallel to said table top (12), said input shaft (62) having a threaded portion extending from an end of said input shaft (62) adjacent the drive assembly (20);
an adjustment nut (66) threaded onto said threaded portion; and
an elongated link (68) pivotably connected at one end to said adjustment nut (66) and pivotably mounted at an opposite end to said housing (21) of said drive assembly (20),
whereby rotation of said input shaft (62) causes translation of said adjustment nut (66) along said input shaft (62), and
whereby translation of said adjustment nut (66) translates said drive assembly (20) by way of the elongated link (68).

8. The table saw (10) of claim 3, wherein:
said drive assembly (20) includes a housing (21) supporting said motor (27); and
said height adjustment mechanism (42) includes;
an input shaft (44) supported by said carriage (40) substantially parallel to said table top (12), said input shaft (44) having a worm gear portion at an end of said input shaft (44) adjacent the drive assembly (20); and
at least a segment of a gear mounted to said housing (21) substantially parallel to the plane of the saw blade (14) and arranged to mesh with said worm gear portion of said input shaft (44),
wherein rotation of said input shaft (44) and worm gear portion pivots said drive assembly (20) via the gear segment and drive assembly (20) housing (21).

9. The table saw (10) of claim 8, wherein said at least a segment of a gear is a segment of a spur gear or a ring gear.

10. The table saw (10) of claim 9, wherein the segment subtends an angle of 40°-55°.

11. The table saw (10) of claim 3, further comprising a bevel adjustment assembly engaged between said carriage (40) and said table top (12) and configured to pivot said carriage (40) and said blade and drive assembly (20) supported by said carriage (40) about an axis parallel to said plane of said saw blade (14).

12. The table saw (10) of claim 11, wherein:
said carriage (40) is pivotably mounted to said table top (12) to pivot about a bevel axis substantially parallel to said table top (12) and parallel to said plane of said saw blade (14); and
said bevel adjustment assembly includes;
an input shaft (44) supported relative to said table top (12) substantially parallel to said table top (12) and perpendicular to said plane of said saw blade (14), said input shaft (44) having a worm gear portion at an end of said input shaft (44) adjacent the drive assembly (20); and
a gear segment mounted to said carriage (40) in a plane substantially perpendicular to the plane of the saw blade (14) and arranged to mesh with said worm gear portion of said input shaft (44),
wherein rotation of said input shaft (44) and worm gear portion pivots said carriage (40) about said bevel axis via the gear segment.

13. The table saw (10) of claim 1, further comprising a tubular frame (80) assembly supporting said table top (12) and defining an envelope within which the drive assembly (20) is wholly disposed.

14. The table saw (10) of claim 13, wherein said frame (80) assembly includes:
four tubular bottom members defining a generally rectangular base corresponding to the shape of the table top (12);
four tubular connecting members connecting the bottom members to the table top (12); and
a cross member extending between two of the connecting members at a position substantially aligned with a center of gravity of the table saw (10), said cross member including a manually grippable handle for carrying the table saw (10).

15. The table saw (10) of claim 3, further comprising a riving knife (160) connected to the drive assembly (20) to move relative to the table top (12) as the height of the drive assembly (20) is adjusted by the height adjustment mechanism (42).

16. The table saw (10) of claim 15, wherein:
the drive assembly (20) includes a housing (21) supporting said motor (27); and
said riving knife (160) is adjustably mounted to said housing (21).

17. The table saw (10) of claim 15, further comprising:
a first elongated link pivotably connected at one end to a lower end of said riving knife (160) and pivotably connected at an opposite end to said carriage (40); and
a second elongated link pivotably connected at one end to said lower end of said riving knife (160) and pivotably connected at an opposite end to said saw blade (14).

18. The table saw (10) of claim 1, further comprising:
a drive assembly (20) including:
the motor (27) having a motor shaft (29);
a housing (21) supporting said motor (27); and
the gear arrangement (31/24) between the motor shaft (29) and the saw blade (14) for rotating the saw blade (14) on operation of the motor (27),
a carriage (40) supporting said saw blade (14) and said drive assembly (20) relative to said table top (12); and
a height adjustment mechanism (42) disposed between said carriage (40) and said drive assembly (20) for adjusting the height of the drive assembly (20) and the saw blade (14) relative to the table top (12), said height adjustment mechanism (42) including;
a guide rod supported on said carriage (40) vertically relative to said table top (12);
a guide included on said housing (21) for slidably receiving said guide rod;
a height adjustment shaft (49) supported on said carriage (40) substantially parallel to said guide rod, said shaft including a lead screw portion;
a screw mount (53) included on said housing (21) for threaded engagement with said lead screw portion of said height adjustment shaft (49); and
a drive mechanism for rotating said height adjustment shaft (49) to vertically adjust the drive assembly (20) relative to the table top (12).

19. The table saw (10) of claim 18, wherein said drive mechanism includes:
an input shaft (44) supported by said carriage (40) substantially perpendicular to said height adjustment shaft (49);
a right angle gear arrangement (31/24) between said input shaft (44) and said shaft for translating rotation of said input shaft (44) to rotation of said height adjustment shaft (49).

20. The table saw (10) of claim 18, further comprising:
a riving knife (160);
a first elongated link pivotably connected at one end to a lower end of said riving knife (160) and pivotably connected at an opposite end to said carriage (40); and
a second elongated link pivotably connected at one end to said lower end of said riving knife (160) and pivotably connected at an opposite end to said saw blade (14).

## Patentansprüche

1. Tischsäge (10), umfassend:
eine Tischplatte (12), die einen Schlitz zur Aufnahme eines Sägeblattes (14) durch diesen hindurch definiert;
ein Sägeblatt (14); und
eine Antriebseinheit (20), die umfasst:
einen Motor (27), der eine Motorwelle (29) hat; und
eine Getriebeanordnung (31/24) zwischen der Motorwelle (29) und dem Sägeblatt (14) zum Drehen des Sägeblattes (14) bei Betrieb des Motors (27),
**dadurch gekennzeichnet, dass** die Antriebseinheit (20) relativ zur Tischplatte (12) abgestützt wird, sodass die Motorwelle (29) im Wesentlichen parallel zur Ebene des Sägeblattes (14) und der Tischplatte (12) angeordnet ist.

2. Tischsäge (10) nach Anspruch 1, wobei die Getriebeanordnung (31/24) umfasst:
ein Schneckengetriebe (31) auf der Motorwelle (29); und
ein Abtriebsrad (24), das mit dem Sägeblatt (14) verbunden ist und dafür ausgelegt ist, mit dem Schneckengetriebe (31) unter einem im Wesentlichen rechten Winkel im Eingriff zu sein.

3. Tischsäge (10) nach Anspruch 1, ferner umfassend:
einen Schlitten (40), der das Sägeblatt (14) und die Antriebseinheit (20) relativ zur Tischplatte (12) abstützt; und
einen Höheneinstellmechanismus (42), der zwischen dem Schlitten (40) und der Antriebseinheit (20) zum Einstellen der Höhe der Antriebseinheit (20) und des Sägeblattes (14) relativ zur Tischplatte (12) angeordnet ist.

4. Tischsäge (10) nach Anspruch 3, wobei:
die Antriebseinheit (20) ein Gehäuse (21) enthält, das den Motor (27) stützt; und
wobei der Höheneinstellmechanismus (42) umfasst:
eine Führungsstange (55), die auf dem Schlitten (40) vertikal relativ zur Tischplatte (12) gestützt wird;
eine Führung (56), die auf dem Gehäuse (21) zur gleitenden Aufnahme der Führungsstange (55) enthalten ist;
eine Höhenverstellwelle (49), die auf dem Schlitten (40) im Wesentlichen parallel zur Führungsstange abgestützt wird, wobei die Welle einen Leitspindelabschnitt enthält;
eine Schraubhalterung (53), die auf dem Gehäuse (21) zum Gewindeeingriff in den Leitspindelabschnitt der Höhenverstellwelle (49) enthalten ist; und
einen Antriebsmechanismus zum Drehen der Höhenverstellwelle (49), um die Antriebseinheit (20) relativ zur Tischplatte (12) vertikal einzustellen.

5. Tischsäge (10) nach Anspruch 4, wobei die Antriebseinheit umfasst:
eine Eingangswelle (44), die vom Schlitten (40) im Wesentlichen senkrecht zur Höhenverstellwelle (49) gestützt wird;
eine rechtwinklige Getriebeanordnung (31/24) zwischen der Eingangswelle (44) und der Welle zum Übertragen von Drehung der Eingangswelle (44) auf die Drehung der Höhenverstellwelle (49).

6. Tischsäge (10) nach Anspruch 5, wobei die Eingangswelle (44) eine Handkurbel (45) umfasst, die fernbedienbar von der rechtwinkligen Getriebeanordnung (31/24) ist, um eine manuelle Drehung der Eingangswelle (44) zu ermöglichen.

7. Tischsäge (10) nach Anspruch 3, wobei:
die Antriebseinheit (20) ein Gehäuse (21) enthält, das den Motor (27) stützt; und
wobei der Höheneinstellmechanismus (60) umfasst:
eine Eingangswelle (62), die vom Schlitten (40) im Wesentlichen parallel zur Tischplatte (12) abgestützt wird, wobei die Eingangswelle (62) einen Gewindeabschnitt hat, der sich von einem Ende der Eingangswelle (62) neben der Antriebseinheit (20) aus erstreckt;
eine Einstellmutter (66), die auf den Gewindeabschnitt aufgeschraubt ist; und
ein langgestrecktes Verbindungsstück (68), das schwenkbar an einem Ende mit der Einstellmutter (66) verbunden ist und schwenkbar an einem entgegengesetzten Ende mit dem Gehäuse (21) der Antriebseinheit (20) befestigt ist,
wobei die Drehung der Eingangswelle (62) eine Verschiebung der Einstellmutter (66) entlang der Eingangswelle (62) bewirkt, und
wobei die Verschiebung der Einstellmutter (66) die Antriebseinheit (20) durch das langgestreckte Verbindungsstück (68) bewirkt.

8. Tischsäge (10) nach Anspruch 3, wobei:
die Antriebseinheit (20) ein Gehäuse (21) enthält, das den Motor (27) stützt; und
wobei der Höheneinstellmechanismus (42) umfasst:
eine Eingangswelle (44), die vom Schlitten (40) im Wesentlichen parallel zur Tischplatte (12) abgestützt wird, wobei die Eingangswelle (44) einen Schneckenradanteil hat, der sich an einem Ende der Eingangswelle (44) neben der Antriebseinheit (20) erstreckt; und
mindestens ein Segment eines Getriebes, das am Gehäuse (21) im Wesentlichen parallel zur Ebene des Sägeblattes (14) befestigt und so angeordnet ist, dass es in den Schneckenradanteil der Eingangswelle (44) eingreift,
wobei die Drehung der Eingangswelle (44) und des Schneckenradanteils die Antriebseinheit (20) über das Getriebesegment und das Antriebseinheits-(20)Gehäuse (21) schwenkt.

9. Tischsäge (10) nach Anspruch 8, wobei das mindestens eine Segment eines Getriebes ein Segment eines Stirnradgetriebes oder eines Hohlrades ist.

10. Tischsäge (10) nach Anspruch 9, wobei das Segment einem Winkel von 40°-55° gegenüberliegt.

11. Tischsäge (10) nach Anspruch 3, ferner umfassend eine Schrägeneinstellvorrichtung, die zwischen dem Schlitten (40) und der Tischplatte (12) eingeschaltet ist und die dafür ausgelegt ist, den Schlitten (40) und das Blatt und die Antriebseinheit (20), die vom Schlitten (40) gestützt wird, um eine Achse parallel zur Ebene des Sägeblattes (14) zu schwenken.

12. Tischsäge (10) nach Anspruch 11, wobei:
der Schlitten (40) schwenkbar an der Tischplatte (12) befestigt ist, zum Schwenken um eine Schrägachse, die im Wesentlichen parallel zur Tischplatte (12) und parallel zur Ebene des Sägeblattes (14); und
wobei die Schrägeneinstellvorrichtung umfasst:
eine Eingangswelle (44), die relativ zur Tischplatte (12) im Wesentlichen parallel zur Tischplatte (12) und senkrecht zur Ebene des Sägeblattes (14) abgestützt wird, wobei die Eingangswelle (44) einen Schneckenradanteil an einem Ende der Eingangswelle (44) neben der Antriebseinheit (20) hat; und
mindestens ein Segment eines Getriebes, das am Schlitten (40) in einer Ebene im Wesentlichen senkrecht zur Ebene des Sägeblattes (14) befestigt und so angeordnet ist, dass es in den Schneckenradanteil der Eingangswelle (44) eingreift,
wobei die Drehung der Eingangswelle (44) und des Schneckenradanteils den Schlitten (40) um die Schrägachse über das Getriebesegment schwenkt.

13. Tischsäge (10) nach Anspruch 1, ferner umfassend eine Rohrrahmen (80)-Anordnung, die die Tischplatte (12) stützt und eine Hülle definiert, innerhalb derer die Antriebseinheit (20) vollständig angeordnet ist.

14. Tischsäge (10) nach Anspruch 13, wobei die Rahmen (80)-Anordnung umfasst:
vier rohrförmige Bodenelemente, die eine im Allgemeinen rechteckige Basis definieren, die der Form der Tischplatte (12) entspricht;
vier rohrförmige Verbindungselemente, die die Bodenelemente mit der Tischplatte (12) verbinden; und
ein Querelement, das sich zwischen zwei der Verbindungselemente an einer Position erstreckt, die im Wesentlichen zum einem Schwerpunkt der Tischsäge (10) ausgerichtet ist, wobei das Querelement einen greifbaren Handgriff zum Tragen der Tischsäge (10) enthält.

15. Tischsäge (10) nach Anspruch 3, ferner einen Spaltkeil (160) umfassend, der mit der Antriebseinheit (20) verbunden ist, um sich relativ zur Tischplatte (12) zu bewegen, wenn die Höhe der Antriebseinheit (20) durch den Höheneinstellmechanismus (42) eingestellt wird.

16. Tischsäge (10) nach Anspruch 15, wobei:
die Antriebseinheit (20) ein Gehäuse (21) enthält, das den Motor (27) stützt; und
der Spaltkeil (160) einstellbar am Gehäuse (21) befestigt ist.

17. Tischsäge (10) nach Anspruch 15, ferner umfassend:
ein erstes langgestrecktes Verbindungsstück, das an einem Ende mit einem unteren Ende des Spaltkeils (160) verbunden und schwenkbar an einem entgegengesetzten Ende mit dem Schlitten (40) verbunden ist; und
ein zweites langgestrecktes Verbindungsstück, das an einem Ende mit dem unteren Ende des Spaltkeils (160) verbunden und schwenkbar an einem entgegengesetzten Ende mit dem Sägeblatt (14) verbunden ist.

18. Tischsäge (10) nach Anspruch 1, ferner umfassend:
eine Antriebseinheit (20), die umfasst:
den Motor (27), der eine Motorwelle (29) hat;
ein Gehäuse (21), das den Motor (27) stützt; und
die Getriebeanordnung (31/24) zwischen der Motorwelle (29) und dem Sägeblatt (14) zum Drehen des Sägeblattes (14) bei Betrieb des Motors (27),
einen Schlitten (40), der das Sägeblatt (14) und die Antriebseinheit (20) relativ zur Tischplatte (12) abstützt; und
einen Höheneinstellmechanismus (42), der zwischen dem Schlitten (40) und der Antriebseinheit (20) zum Einstellen der Höhe der Antriebseinheit (20) und des Sägeblattes (14) relativ zur Tischplatte (12) angeordnet ist, wobei der Höheneinstellmechanismus (42) umfasst:
eine Führungsstange , die auf dem Schlitten (40) vertikal relativ zur Tischplatte (12) gestützt wird;
eine Führung , die auf dem Gehäuse (21) zur gleitenden Aufnahme der Führungsstange enthalten ist;
eine Höhenverstellwelle (49), die auf dem Schlitten (40) im Wesentlichen parallel zur Führungsstange abgestützt wird, wobei die Welle einen Leitspindelabschnitt enthält;
eine Schraubhalterung (53), die auf dem Gehäuse (21) zum Gewindeeingriff in den Leitspindelabschnitt der Höhenverstellwelle (49) enthalten ist; und
einen Antriebsmechanismus zum Drehen der Höhenverstellwelle (49), um die Antriebseinheit (20) relativ zur Tischplatte (12) vertikal einzustellen.

19. Tischsäge (10) nach Anspruch 18, wobei die Antriebseinheit umfasst:
eine Eingangswelle (44), die vom Schlitten (40) im Wesentlichen senkrecht zur Höhenverstellwelle (49) gestützt wird;
eine rechtwinklige Getriebeanordnung (31/24) zwischen der Eingangswelle (44) und der Welle zum Übertragen von Drehung der Eingangswelle (44) auf die Drehung der Höhenverstellwelle (49).

20. Tischsäge (10) nach Anspruch 18, ferner umfassend:
einen Spaltkeil (160);
ein erstes langgestrecktes Verbindungsstück, das an einem Ende mit einem unteren Ende des Spaltkeils (160) und schwenkbar an einem entgegengesetzten Ende mit dem Schlitten (40) verbunden ist; und
ein zweites langgestrecktes Verbindungsstück, das an einem Ende mit dem unteren Ende des Spaltkeils (160) und schwenkbar an einem entgegengesetzten Ende mit dem Sägeblatt (14) verbunden ist.

## Revendications

1. Scie circulaire sur table (10) comprenant :
un dessus de table (12) définissant une fente pour recevoir une lame de scie (14) au travers ;
une lame de scie (14) ; et
un ensemble d'entraînement (20) incluant :
un moteur (27) ayant un arbre de moteur (29) ; et
un agencement d'engrenages (31/24) entre l'arbre de moteur (29) et la lame de scie (14) pour faire tourner la lame de scie (14) quand le moteur (27) fonctionne,
**caractérisé en ce que** l'ensemble d'entraînement (20) est supporté par rapport au dessus de table (12) de façon à ce que l'arbre de moteur (29) soit agencé essentiellement parallèle à un plan de la lame de scie (14) et du dessus de table (12).

2. Scie circulaire sur table (10) selon la revendication 1, dans laquelle l'agencement d'engrenages (31/24) inclut :
un engrenage à vis sans fin (31) sur ledit arbre de moteur (29) ; et
une roue menée (24) associée à ladite lame de scie (14) et configurée pour s'engrener avec ledit engrenage à vis sans fin (31) à essentiellement angle droit.

3. Scie circulaire sur table (10) selon la revendication 1, comprenant en outre :
un chariot (40) supportant ladite lame de scie (14) et ledit ensemble d'entraînement (20) par rapport audit dessus de table (12) ; et
un mécanisme de réglage en hauteur (42) disposé entre ledit chariot (40) et ledit ensemble d'entraînement (20) pour régler la hauteur de l'ensemble d'entraînement (20) et de la lame de scie (14) par rapport au dessus de table (12).

4. Scie circulaire sur table (10) selon la revendication 3, dans laquelle :
ledit ensemble d'entraînement (20) inclut un logement (21) supportant ledit moteur (27) ; et
ledit mécanisme de réglage en hauteur (42) inclut ;
une tige de guidage (55) supportée sur ledit chariot (40) verticalement par rapport audit dessus de table (12) ;
un guide (56) inclus sur ledit logement (21) pour recevoir ladite tige de guidage (55) de manière coulissante ;
un arbre de réglage en hauteur (49) supporté sur ledit chariot (40) essentiellement parallèle à ladite tige de guidage, ledit arbre inclut une partie de vis-mère ;
un montage de vis (53) inclus sur ledit logement (21) pour un engagement fileté avec ladite partie de vis-mère dudit arbre de réglage en hauteur (49) ; et
un mécanisme d'entraînement pour faire tourner ledit arbre de réglage en hauteur (49) pour régler l'ensemble d'entraînement (20) verticalement par rapport au-dessus de table (12).

5. Scie circulaire sur table (10) selon la revendication 4, dans laquelle le mécanisme d'entraînement inclut :
un arbre d'entrée (44) supporté par ledit chariot (40) essentiellement perpendiculaire audit arbre de réglage en hauteur (49) ;
un agencement d'engrenages à angle droit (31/24) entre ledit arbre d'entrée (44) et ledit arbre pour translater la rotation dudit arbre d'entrée (44) en rotation dudit arbre de réglage en hauteur (49).

6. Scie circulaire sur table (10) selon la revendication 5, dans laquelle ledit arbre d'entrée (44) inclut une manivelle (45) accessible à distance depuis ledit agencement d'engrenages à angle droit (31/24) pour permettre la rotation manuelle dudit arbre d'entrée (44).

7. Scie circulaire sur table (10) selon la revendication 3, dans laquelle :
ledit ensemble d'entraînement (20) inclut un logement (21) supportant ledit moteur (27) ; et
ledit mécanisme de réglage en hauteur (60) inclut ;
un arbre d'entrée (62) supporté par ledit chariot (40) essentiellement parallèle audit dessus de table (12), ledit arbre d'entrée (62) ayant une partie filetée s'étendant depuis une extrémité dudit arbre d'entrée (62) adjacente audit ensemble d'entraînement (20) ;
une rainure de réglage (66) filetée sur ladite partie filetée ; et
un lien allongé (68) connecté de manière pivotante à une extrémité de ladite rainure de réglage (66) et monté en pivotement sur une extrémité opposée audit logement (21) dudit ensemble d'entraînement (20),
ce en quoi la rotation dudit arbre d'entrée (62) provoque la translation de ladite rainure de réglage (66) le long dudit arbre d'entrée (62), et
ce en quoi la translation de ladite rainure de réglage (66) fait translater ledit ensemble d'entraînement (20) au moyen du lien allongé (68).

8. Scie circulaire sur table (10) selon la revendication 3, dans laquelle :
ledit ensemble d'entraînement (20) inclut un logement (21) supportant ledit moteur (27) ; et
ledit mécanisme de réglage en hauteur (42) inclut ;
un arbre d'entrée (44) supporté par ledit chariot (40) essentiellement parallèlement audit dessus de table (12), ledit arbre d'entrée (44) présente une partie d'engrenage à vis sans fin à une extrémité dudit arbre d'entrée (44) adjacente à l'ensemble d'entraînement (20) ; et
au moins un segment d'un engrenage monté sur ledit logement (21) essentiellement parallèle au plan de la lame de scie (14) est agencé pour s'engrener avec ladite partie d'engrenage à vis sans fin dudit arbre d'entrée (44),
dans lequel la rotation dudit arbre d'entrée (44) et la partie d'engrenage à vis sans fin fait pivoter ledit ensemble d'entraînement (20) par le biais du segment d'engrenage et ensemble d'entraînement (20) logement (21).

9. Scie circulaire sur table (10) selon la revendication 8, dans laquelle ledit au moins un segment d'un engrenage est un segment d'une roue droite cylindrique ou d'une couronne.

10. Scie circulaire sur table (10) selon la revendication 9, dans laquelle le segment sous-tend un angle de 40°-55°.

11. Scie circulaire sur table (10) selon la revendication 3, comprenant en outre un ensemble de réglage en biseau engagé entre ledit chariot (40) et ledit dessus de table (12) et configuré pour faire pivoter ledit chariot (40) et ladite lame et ledit ensemble d'entraînement (20) supporté par ledit chariot (40) sur un axe parallèle audit plan de ladite lame de scie (14).

12. Scie circulaire sur table (10) selon la revendication 11, dans laquelle :
ledit chariot (40) est monté pivotant sur ledit dessus de table (12) pour pivoter sur un axe de biseau essentiellement parallèle audit dessus de table (12) et parallèle audit plan de ladite lame de scie (14) ; et
ledit ensemble de réglage en biseau inclut ;
un arbre d'entrée (44) supporté par rapport audit dessus de table (12) essentiellement parallèle audit dessus de table (12) et perpendiculaire audit plan de ladite lame de scie (14), ledit arbre d'entrée (44) présentant une partie d'engrenage à vis sans fin à une extrémité dudit arbre d'entrée (44) adjacente à l'ensemble d'entraînement (20) ; et
un segment d'engrenage monté sur ledit chariot (40) dans un plan essentiellement perpendiculaire au plan de la lame de scie (14) et agencé pour s'engrener avec ladite partie d'engrenage à vis sans fin dudit arbre d'entrée (44),
dans lequel la rotation dudit arbre d'entrée (44) et de ladite partie d'engrenage à vis sans fin fait pivoter ledit chariot (40) sur ledit axe de biseau par le biais du segment d'engrenage.

13. Scie circulaire sur table (10) selon la revendication 1, comprenant en outre un ensemble de cadre tubulaire (80) supportant ledit dessus de table (12) et définissant une enveloppe à l'intérieur de laquelle l'ensemble d'entraînement (20) est disposé en intégralité.

14. Scie circulaire sur table (10) selon la revendication 13, dans laquelle ledit ensemble de cadre (80) inclut :
quatre membres inférieurs tubulaires définissant une base généralement rectangulaire correspondant à la forme du dessus de table (12) ;
quatre membres de liaison tubulaires reliant les membres inférieurs eu dessus de table (12) ; et
un membre transversal s'étendant entre deux des membres de connexion à une position essentiellement alignée avec un centre de gravité de la scie circulaire sur table (10), ledit membre transversal incluant une poignée pouvant être saisie à la main pour transporter la scie circulaire sur table (10).

15. Scie circulaire sur table (10) selon la revendication 3, comprenant en outre un couteau diviseur (160) relié à l'ensemble d'entraînement (20) pour se déplacer par rapport au dessus de table (12) à mesure que la hauteur de l'ensemble d'entraînement (20) est réglée par le mécanisme de réglage en hauteur (42).

16. Scie circulaire sur table (10) selon la revendication 15, dans laquelle :
l'ensemble d'entraînement (20) inclut un logement (21) supportant ledit moteur (27) ; et ledit couteau diviseur (160) est monté de manière réglable sur ledit logement (21).

17. Scie circulaire sur table (10) selon la revendication 15, comprenant en outre :
un premier lien allongé relié pivotant par une extrémité à une extrémité inférieure dudit couteau diviseur (160) et relié pivotant par une extrémité opposée audit chariot (40) ; et
un second lien allongé relié pivotant par une extrémité à ladite extrémité inférieure dudit couteau diviseur (160) et relié pivotant par une extrémité opposée à ladite lame de scie (14).

18. Scie circulaire sur table (10) selon la revendication 1, comprenant en outre :
un ensemble d'entraînement (20) incluant :
le moteur (27) présentant un arbre de moteur (29) ;
un logement (21) supportant ledit moteur (27) ; et
l'agencement d'engrenages (31/24) entre l'arbre moteur (29) et la lame de scie (14) pour faire tourner la lame de scie (14) quand le moteur (27) fonctionne,
un chariot (40) supportant ladite lame de scie (14) et ledit ensemble d'entraînement (20) par rapport audit dessus de table (12) ; et
un mécanisme de réglage en hauteur (42) disposé entre ledit chariot (40) et ledit ensemble d'entraînement (20) pour régler la hauteur de l'ensemble d'entraînement (20) et de la lame de scie (14) par rapport au dessus de table (12), ledit mécanisme de réglage en hauteur (42) incluant :
une tige de guidage supportée sur ledit chariot (40) verticalement par rapport audit dessus de table (12) ;
un guide inclus sur ledit logement (21) pour recevoir ladite tige de guidage de manière coulissante ;
un arbre de réglage en hauteur (49) supporté sur ledit chariot (40) essentiellement parallèle à ladite tige de guidage, ledit arbre inclut une partie de vis-mère ;
un montage de vis (53) inclus sur ledit logement (21) pour un engagement fileté avec ladite partie de vis-mère dudit arbre de réglage en hauteur (49) ; et
un mécanisme d'entraînement pour faire tourner ledit arbre de réglage en hauteur (49) pour régler l'ensemble d'entraînement (20) verticalement par rapport au-dessus de table (12).

19. Scie circulaire sur table (10) selon la revendication 18, dans lequel ledit mécanisme d'entraînement inclut :
un arbre d'entrée (44) supporté par ledit chariot (40) essentiellement perpendiculaire audit arbre de réglage en hauteur (49) ;
un agencement d'engrenages à angle droit (31/24) entre ledit arbre d'entrée (44) et ledit arbre pour translater la rotation dudit arbre d'entrée (44) en rotation dudit arbre de réglage en hauteur (49).

20. Scie circulaire sur table (10) selon la revendication 18, comprenant en outre :
un couteau diviseur (160) ;
un premier lien allongé relié pivotant par une extrémité à une extrémité inférieure dudit couteau diviseur (160) et relié pivotant par une extrémité opposée audit chariot (40) ; et
un second lien allongé relié pivotant par une extrémité à ladite extrémité inférieure dudit couteau diviseur (160) et relié pivotant par une extrémité opposée à ladite lame de scie (14).
